# EUROPÄISCHE PATENTSCHRIFT

(11) **EP 3 027 391 B1**
(45) Veröffentlichungstag und Bekanntmachung des Hinweises auf die Patenterteilung: **07.03.2018**
(21) Anmeldenummer: 14741914.7
(22) Anmeldetag: 23.07.2014
(51) Int. Cl.: B29C 70/32, B29C 37/00, B29C 70/08, B29C 70/38

(54) **VERFAHREN ZUR HERSTELLUNG ROHRFÖRMIGER FASERVERBUNDKÖRPER**
METHOD FOR PRODUCING TUBULAR FIBER COMPOSITE BODIES
PROCÉDÉ SERVANT À FABRIQUER DES CORPS COMPOSITES À BASE DE FIBRES DE FORME TUBULAIRE

(30) Priorität: 01.08.2013 DE 102013108259
(43) Veröffentlichungstag der Anmeldung: 08.06.2016
(73) Patentinhaber: ThyssenKrupp Bilstein GmbH, 58256 Ennepetal (DE)
(72) Erfinder: CICHY, Frank, 01309 Dresden (DE); HÄHNEL, Martin, 04425 Taucha (DE)
(74) Vertreter: thyssenkrupp Intellectual Property GmbH
(86) Internationale Anmeldenummer: PCT/EP2014/065814
(87) Internationale Veröffentlichungsnummer: WO 2015/014687

(56) Entgegenhaltungen:
- WO-A1-95/23179
- DE-A1-102011 109 362
- FR-A1- 2 673 575
- GB-A- 1 034 738
- PETERS S T ET AL: "Composites, Filament Winding", 1. Dezember 2001 (2001-12-01), ASM HANDBOOK / PREPARED UNDER THE DIRECTION OF THE ASM INTERNATIONAL HANDBOOK COMMITTEE, ASM INTERNATIONAL, MATERIALS PARK, OHIO ,USA, PAGE(S) 536 - 549, XP002591048, ISBN: 978-0-87170-703-1 das ganze Dokument

## Beschreibung

Die vorliegende Erfindung betrifft ein Verfahren zur Herstellung rohrförmiger Faserverbundkörper mittels einem sich in einer Axialrichtung erstreckenden zylinderförmigen Kernkörper, auf dem Fasermaterial in einem kontinuierlichen Ablageverfahren abgelegt wird.

### STAND DER TECHNIK

Aus der DE 10 2011 109 362 A1 ist ein Verfahren zur Herstellung rohrförmiger Faserverbundkörper mittels einem sich in einer Axialrichtung erstreckenden zylinderförmigen Kernkörper bekannt, der als Wickeldorn bezeichnet ist. Auf diesen werden mehrere Lagen aus Fasermaterial abgelegt, wobei das Fasermaterial nass ausgebracht wird und daher bereits eine Matrix aufweist. Nach einem Härteverfahren kann der so gebildete rohrförmige Faserverbundkörper vom Wickeldorn gelöst werden, und der rohrförmige Faserverbundkörper kann beispielsweise eingesetzt werden als Dämpferrohr für einen Schwingungsdämpfer, wie dieser als Bestandteil des Fahrwerkes eines Fahrzeugs bekannt ist.

Das beschriebene Verfahren zur Herstellung des rohrförmigen Faserverbundkörpers umfasst einen Verfahrensschritt, bei dem auf der Innenseite des Faserverbundkörpers eine Beschichtung aufgebracht wird. Dadurch wird erreicht, dass der Faserverbundkörper beispielsweise zur Bildung eines Dämpferrohres aus einem Faserverbundmaterial ausgebildet wird, wobei zugleich eine Beschichtung auf der Innenseite des Dämpferrohres vorgesehen ist, die den Gleitpartner des Dämpferkolbens bildet. Damit kann das Dämpferrohr ohne metallische Komponenten aufgebaut werden, sodass das Gewicht des Dämpferrohres gegenüber einer Ausführung aus einem metallischen Grundkörper reduziert werden kann. Die Beschichtung kann dabei aus einem Stoff gebildet werden, der dem Stoff gleicht, der zur Bildung der Matrix für den Faserverbundkörper Verwendung findet. Folglich entsteht eine Matrix mit einem im Wesentlichen homogenen Übergang in einen Innenbereich, der frei von Fasermaterial ausgebildet ist, um einen vorteilhaften Gleitpartner für den Dämpferkolben zu bilden. Erst mit einem gewissen Abstand von der Innenseite des rohrförmigen Faserverbundkörpers beginnt der Schichtaufbau aus Fasermaterial, wobei der Abstand bestimmt wird durch die Dicke der Beschichtung. Auch ergibt sich der Vorteil, dass die Beschichtung nicht erst nach dem Entkernen auf die Innenseite des Rohrkörpers aufgebracht werden muss.

Die Beschichtung, beispielsweise bestehend aus einem Epoxidharz, muss angetrocknet werden, wobei der Antrocknungsvorgang auch als Angelieren bezeichnet wird. Dadurch erreicht das Epoxidharz eine gewisse Formfestigkeit, jedoch darf das Antrocknen des Epoxidharzes nicht zu weit geführt werden, da dann die Bindungsfähigkeit mit der Matrix des aufgebrachten Schichtaufbaus nicht mehr gegeben ist. Ein Ablösen der Beschichtung von der Innenseite des Schichtaufbaus wäre die Folge.

Bei einem nur geringfügigen Angelieren erlangt die Beschichtung aus dem Epoxidharz keine besondere Widerstandsfähigkeit gegen das Aufbringen des Fasermaterials, was unter einer gewissen Faserspannung erfolgt, insbesondere wenn das Fasermaterial im Wickelverfahren auf die Beschichtung aufgebracht wird. Die Beschichtung kann dadurch in ihrer Struktur verändert werden, was sich nach einem späteren Härteprozess negativ auf die Beschaffenheit der innenseitigen Oberfläche des rohrförmigen Faserverbundkörpers auswirkt.

### OFFENBARUNG DER ERFINDUNG

Aufgabe der Erfindung ist die Weiterbildung eines Verfahrens zur Herstellung eines rohrförmigen Faserverbundkörpers mit einer innenseitigen Beschichtung, die vorteilhafte Eigenschaften aufweist und die eine hinreichende Bindung zu einem auf die Beschichtung aufgebrachten Fasermaterial mit einer Matrix aufweist.

Diese Aufgabe wird ausgehend von einem Verfahren zur Herstellung rohrförmiger Faserverbundkörper gemäß dem Oberbegriff des Anspruchs 1 und ausgehend von einem Faserverbundkörper gemäß dem Oberbegriff des Anspruchs 8 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren wenigstens die Schritte der Beschichtung auf den Kernkörper aufweist, weiterhin weist das Verfahren den Schritt des Aufbringens einer Vliesschicht auf die Beschichtung auf, wobei schließlich auf die Vliesschicht das Fasermaterial zur Bildung wenigstens einer ersten Faserschicht aufgebracht wird.

Das erfindungsgemäße Verfahren sieht damit eine Vliesschicht vor, die als Kopplungsschicht zwischen der Beschichtung und dem Schichtaufbau durch das Fasermaterial dient, um auftretende Lasten im Fasermaterial auf der Innenfläche des rohrförmigen Faserverbundkörpers über die erste Faserschicht gleichmäßig und homogen auf die Beschichtung weiterzuleiten. Durch die Kopplungsschicht bestehend aus der Vliesschicht werden lokale Bereiche mit einem hohen Druck von der ersten Faserschicht auf die Beschichtung abgeschwächt und gleichmäßig über eine größere Oberfläche verteilt. Dadurch wird auch bei einem nicht vollständigen Austrocknen der Beschichtung, die beispielsweise aus einem Epoxidharz bestehen kann, vermieden, dass das Ablegen des Fasermaterials die Beschichtung nachteilig beeinträchtigt.

Nach einer vorteilhaften Weiterbildung des Verfahrens können auf den Kernkörper Lasteinleitungselemente angeordnet werden, auf die die wenigstens eine Faserschicht zumindest teilweise abgelegt wird und die einen Bestandteil des hergestellten Faserverbundkörpers bilden. Beispielsweise können die rohrförmigen Faserverbundkörper als Dämpferrohre für Schwingungsdämpfer, beispielsweise für Fahrzeugfahrwerke, Verwendung finden, und die rohrförmigen Faserverbundkörper können endseitig abgeschlossen sein mit den sogenannten Lasteinleitungselementen, über die Kräfte und Momente in den rohrförmigen Faserverbundkörper eingeleitet werden. Insbesondere dadurch, dass die wenigstens eine Faserschicht auch auf die Lasteinleitungselemente abgelegt wird, entsteht eine Verbindung zwischen dem Fasermaterial und den Lasteinleitungselementen, die so beschaffen ist, dass auf vorteilhafte Weise Kräfte und Momente übertragen werden können.

Die erste Faserschicht kann beispielsweise im Wickelverfahren auf die Vliesschicht und wenigstens teilweise auf die Lasteinleitungselemente abgelegt werden, insbesondere derart, dass der Faserverlauf der Faserschicht mit der Axialrichtung einen Winkel von 75° bis 85° und bevorzugt von 80° einschließt. Die Beschichtung, die auf den Kernkörper aufgebracht wird, kann beispielsweise vollumfänglich über der Oberfläche des Kernkörpers zwischen zwei Lasteinleitungselementen hinweg aufgebracht sein, und die Vliesschicht wird dabei nur auf die Beschichtung aufgebracht und nicht auch auf die Lasteinleitungselemente. Weiterhin kann wenigstens die erste Faserschicht auf die Vliesschicht und wenigstens teilweise auf die Lasteinleitungselemente abgelegt werden, wobei bevorzugt nur die erste Faserschicht nicht oder nur geringfügig in den an die Beschichtung angrenzenden vorderen Bereich der Lasteinleitungselemente abgelegt werden kann.

Auf die erste Faserschicht und vorzugsweise auch auf die Lasteinleitungselemente kann eine zweite Faserschicht abgelegt werden, insbesondere derart, dass der Faserverlauf der Faserschicht mit einer Axialrichtung einen Winkel von 10° bis 20° und bevorzugt von 15° einschließt. Durch den unterbrechungsfreien Übergang der zweiten Faserschicht von der freien Länge des Faserverbundkörpers und übergehend in die Lasteinleitungselemente können durch die zweite Faserschicht Kräfte übertragen werden von den Lasteinleitungselementen auf den Faserverbundkörper.

Auf die zweite Faserschicht kann wenigstens im Bereich der Lasteinleitungselemente eine dritte Faserschicht abgelegt werden, insbesondere derart, dass der Faserverlauf der Faserschicht mit der Axialrichtung einen Winkel von 75° bis 85° und bevorzugt von 80° einschließt. Durch die dritte Faserschicht wird die zweite Faserschicht im Kraft- und/oder Formschluss mit den Lasteinleitungselementen unterstützt, wodurch die Übertragung von Kräften und Momenten weiter verbessert wird.

Auf die zweite Faserschicht insbesondere im Bereich der freien Länge des Faserverbundkörpers und auf die dritte Faserschicht, die vorzugsweise nur im Bereich der Lasteinleitungselemente vorhanden ist, kann eine vierte Faserschicht abgelegt werden, die sich vorzugsweise über der freien Länge des Faserverbundkörpers und über die Lasteinleitungselemente erstreckt. Die vierte Faserschicht kann so abgelegt werden, dass der Faserverlauf der Faserschicht mit der Axialrichtung einen Winkel von 45° bis 55° und bevorzugt von 50° einschließt. Schließlich kann auf die vierte Faserschicht wenigstens im Bereich der Lasteinleitungselemente eine fünfte Faserschicht abgelegt werden, insbesondere derart, dass der Faserverlauf der Faserschicht mit der Axialrichtung einen Winkel von 75° bis 85° und bevorzugt von 80° einschließt. Dabei stabilisiert die fünfte Faserschicht, wie bereits in Zusammenhang mit der dritten Faserschicht angegeben, die Kraftübertragung zwischen der vierten Faserschicht und den Lasteinleitungselementen.

Das erfindungsgemäße Verfahren ermöglicht folglich einen Schichtaufbau, der einen Druckbereich über der freien Länge des Faserverbundkörpers und einen Lasteinleitungsbereich über den Lasteinleitungselementen aufweist. Die zweite, die dritte, die vierte und die fünfte Faserschicht erstrecken sich über den Druckbereich der freien Länge des Faserverbundkörpers, und der Druckbereich entsteht insbesondere dadurch, dass der Faserverbundkörper als Dämpferrohr eines Schwingungsdämpfers Verwendung finden kann, der im späteren Betrieb mit einem Innendruck beaufschlagt wird. Der Lasteinleitungsbereich mit den Lasteinleitungselementen bildet den Bereich, in dem Kräfte vom Faserverbundkörper auf weitere Anbauteile, beispielsweise Endelemente des Dämpferrohres, übertragen werden. Der Lasteinleitungsbereich weist dabei eine Schichtfolge aus der zweiten, der dritten, der vierten und der fünften Faserschicht auf, wobei insbesondere die dritte und die fünfte Faserschicht Stabilisierungsschichten bilden, die die zweite Faserschicht und die vierte Faserschicht stabilisieren.

Die Aufgabe der vorliegenden Erfindung wird ferner gelöst durch einen Faserverbundkörper, insbesondere zur Bildung eines Dämpferrohres eines Schwingungsdämpfers, der sich rohrförmig in einer Axialrichtung erstreckt und einen Schichtaufbau aus einem Faserverbundwerkstoff aufweist. Der Schichtaufbau zur Bildung einer Schichtfolge weist von innen nach außen eine Beschichtung zur Bildung einer Innenwand auf, weiterhin eine Vliesschicht zur Bildung einer Kopplungsschicht und wenigstens eine erste Faserschicht zur Aufnahme von Kräften. Die Beschichtung kann dabei ein Harz und insbesondere ein Epoxidharz umfassen. Die Vliesschicht kann ein Glasfaservlies oder ein Kohlefaservlies umfassen.

Gemäß einer vorteilhaften Ausführungsvariante des Faserverbundkörpers kann dieser Lasteinleitungselemente aufweisen, die sich in Axialrichtung endseitig an den Bereich der Beschichtung anschließen und auf die die wenigstens eine Faserschicht zumindest teilweise abgelegt ist, insbesondere die einen Faserverlauf aufweist, der mit der Axialrichtung einen Winkel von 75° bis 85° und bevorzugt von 80° einschließt.

Auf die erste Faserschicht und vorzugsweise auch auf die Lasteinleitungselemente kann eine zweite Faserschicht abgelegt sein, insbesondere die einen Faserverlauf aufweist, der mit der Axialrichtung einen Winkel von 10° bis 20° und bevorzugt von 15° einschließt. Auf die zweite Faserschicht kann wenigstens im Bereich der Lasteinleitungselemente eine dritte Faserschicht abgelegt sein, insbesondere die einen Faserverlauf aufweist, der mit der Axialrichtung einen Winkel von 75° bis 85° und bevorzugt von 80° einschließt.

Auf die zweite Faserschicht und auf die dritte Faserschicht kann unterbrechungsfrei eine vierte Faserschicht abgelegt sein, insbesondere die einen Faserverlauf aufweist, der mit der Axialrichtung einen Winkel von 45° bis 55° und bevorzugt von 50° einschließt. Auf die vierte Faserschicht kann wenigstens im Bereich der Lasteinleitungselemente eine fünfte Faserschicht abgelegt sein, insbesondere die einen Faserverlauf aufweist, der mit der Axialrichtung einen Winkel von 75° bis 85° und bevorzugt von 80° einschließt.

Die Lasteinleitungselemente können auf der Außenfläche Vorsprünge aufweisen, wobei die wenigstens eine Faserschicht überwiegend formschließend in den Zwischenräumen zwischen den Vorsprüngen abgelegt ist. Die Vorsprünge können auf der Außenfläche der Lasteinleitungselemente verteilt inselförmig angeordnet sein und insbesondere eine solche Anordnung zueinander aufweisen, dass die Fasern der wenigstens einen Faserschicht mit ihrem Faserverlauf in den Zwischenräumen richtungsunverändert zwischen den Vorsprüngen verlaufen können. Bei einem Ablegen des Fasermaterials können die Fasern durch ein Fadenauge geführt werden, das bei einem rotierenden Kernkörper das Fasermaterial mit einer Axialrichtung über der Länge des zu bildenden rohrförmigen Faserverbundkörpers bewegt. Die Drehung des Kernkörpers und die Axialbewegung des Fadenaugens können dabei so aufeinander abgestimmt werden, dass die Position der Vorsprünge auf den Lasteinleitungselementen berücksichtigt wird, wobei auch die rotatorische Ausrichtung der Lasteinleitungselemente definiert und erfasst wird. Eine Abstimmung der Drehbewegung des entstehenden Faserverbundkörpers und der Axialbewegung des Fadenauges zur Faserführung mit den Positionen der Vorsprünge auf der Außenseite der Lasteinleitungselemente ermöglicht folglich wenigstens überwiegend ein Ablegen der Fasern in den Zwischenräumen zwischen den Vorsprüngen, sodass die Vorsprünge entweder nicht beschädigt werden oder dass das Fasermaterial nicht über die Vorsprünge hinweg verläuft, wodurch eine Störung des Schichtaufbaus über den Lasteinleitungselementen die Folge wäre, die zu vermeiden ist.

Die Lasteinleitungselemente können alternativ auch im Wesentlichen als Rotationskörper ausgebildet sein, wobei die Vorsprünge durch einen umlaufenden Kragen mit über dem Umfang verteilt vorgesehenen Aussparungen im Verlauf des Kragens ausgebildet werden können. So können die Lasteinleitungselemente auch durch eine spanende Bearbeitung, insbesondere durch einen Drehprozess, hergestellt werden, und die Aussparungen können durch einen sich anschließenden Fräsprozess hergestellt werden, wodurch eine einfache und preiswerte Herstellung der Lasteinleitungselemente ermöglicht wird. Sind Vorsprünge mit einer etwa inselförmigen Ausgestaltung vorgesehen, so können die Lasteinleitungselemente beispielsweise in einem Sinterprozess oder in einem Gießverfahren hergestellt werden.

Das Fasermaterial kann durch Filamentstränge, sogenannte Rowings, oder auch durch Garne oder dergleichen gebildet sein. Auf gleiche Weise können im Rahmen der vorliegenden Erfindung auch unidirektionale Bänder abgelegt werden, um Faserschichten zu bilden, und das Fasermaterial kann beispielsweise aus Kohlefaser oder aus Glasfaser bestehen.

Zum Ablegen der Faserschichten kann der Kernkörper in Rotation versetzt werden, und die Faden-, Garn- oder Faserrolle weist eine ruhende Position auf. Alternativ kann, im sogenannten Pull-Winding-Verfahren, der Kernkörper mit dem Faserverbundkörper ruhen, und die Garn-/ oder Fadenrolle wird um den ruhenden Kernkörper beziehungsweise um den zu bildenden Faserverbundkörper bewegt. Das Aufbringen wenigstens einer der Beschichtungen kann auch in einem Flechtverfahren erfolgen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Querschnittsansicht eines gebildeten Faserverbundkörpers in Anordnung auf einem zylinderförmigen Kernkörper,

- Figur 2: einen entformten Faserverbundkörper mit einem endseitig eingebrachten Lasteinleitungselement gemäß einer ersten Variante und
- Figur 3: einen entformten Faserverbundkörper mit einem endseitig eingebrachten Lasteinleitungselement gemäß einer zweiten Variante.

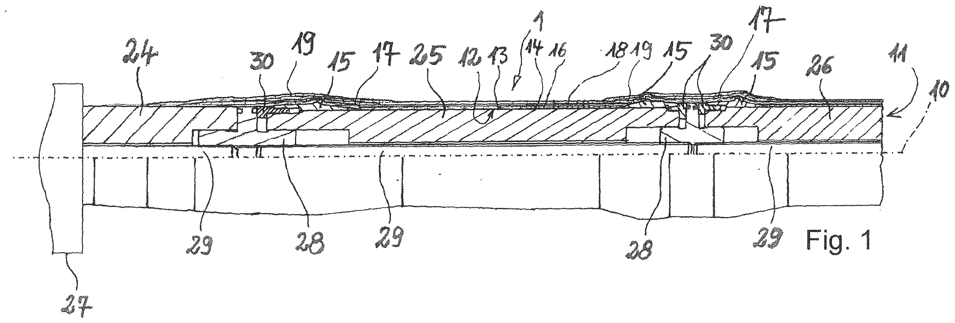

Figur 1 zeigt einen rohrförmigen Faserverbundkörper 1, der auf einem Werkzeug aufgenommen gezeigt ist, und das Werkzeug bildet als wesentliches Element einen zylinderförmigen Kernkörper 11, der sich entlang einer Axialrichtung 10 erstreckt. Der zylinderförmige Kernkörper 11 ist beispielhaft in Anordnung an einer Wickelmaschine 27 gezeigt, durch die der zylinderförmige Kernkörper 11 um die Axialrichtung 10 in Rotation versetzt werden kann. Alternativ zu einer Wickelmaschine 27 ist ebenso eine andersartige Kernkörperlagerung möglich, die eine Faserablage auf und um den Kernkörper 11 herum ermöglicht.

Der zylinderförmige Kernkörper 11 weist mehrere Kernkörperelemente 24, 25 und 26 auf, und das Kernkörperelement 24 ist als Spanndorn 24 ausgeführt, über den die weiteren Kernkörperelemente 25 und 26 aufgenommen sind und es können auch mehr als zwei weitere gezeigte Kernkörperelemente 25 und 26 in axialer Anordnung aneinander vorgesehen sein.

Die Kernkörperelemente 24, 25 und 26 sind durch Kupplungselemente 28 und Zugelemente 29 miteinander verbunden, und die Kupplungselemente 28 bewirken eine zentrierte Anordnung der Kernkörperelemente 24, 25 und 26 in axialer Richtung zueinander, und mit den Zugelementen 29, die endseitig in die Kupplungselemente 28 eingeschraubt sind, können die mehreren Kernkörperelemente 24, 25 und 26 miteinander verspannt werden.

Das gezeigte Werkzeug mit dem zylinderförmigen Kernkörper 11 dient zur Herstellung eines Faserverbund-Gesamtkörpers 1, der im Bereich der Kupplungselemente 28 nach einem Aushärtungsprozess in mehrere einzelne Faserverbundkörper 1 aufgetrennt werden kann, sodass mit einer Werkzeugaufspannung und einer Ausführung des erfindungsgemäßen Verfahrens mehrere rohrförmige Faserverbundkörper 1 hergestellt werden können.

An den Kernkörperelementen 25 und 26 sind über Verschlusselemente 30 Lasteinleitungselemente 15 aufgenommen, wobei die Lasteinleitungselemente 15 mit Fasermaterial ebenso wie auch die freie Länge der Kernkörperelemente 25 und 26 umwickelt werden können, sodass die Lasteinleitungselemente 15 nach Entformen der Faserverbundkörper 1 einen Bestandteil dieser bilden. Zwischen den Lasteinleitungselementen 15 auf verschiedenen Kernkörperelementen 24, 25 oder 26 kann der Trennprozess erfolgen, um die einzelnen Faserverbundkörper 1 zu bilden, beispielsweise durch ein Sägeverfahen.

Der Schichtaufbau weist mehrere Faserschichten auf, und innenseitig weist der Faserverbundkörper 1 eine Beschichtung 12 auf, und die Beschichtung 12 wird vor dem Ablegen der ersten Faserschicht 14 auf der Oberfläche der Kernkörperelemente 25 und 26 aufgebracht.

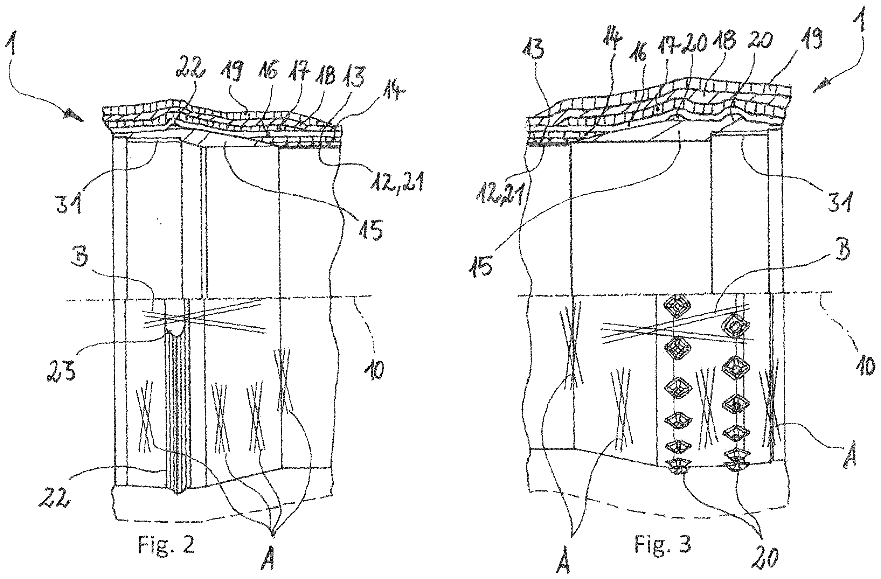

Nach einem Angelieren der Beschichtung 12, beispielsweise gebildet durch ein Epoxidharz, erfolgt noch vor dem Ablegen der ersten Faserschicht 14 das Aufbringen einer Vliesschicht 13, und erst auf die Vliesschicht 13 folgt das Ablegen der ersten Faserschicht 14, der zweiten Faserschicht 16, der dritten Faserschicht 17, der vierten Faserschicht 18 und schließlich der fünften Faserschicht 19. Die Anordnung und Ausgestaltung der Faserschichten 14, 16, 17, 18 und 19 wird in Zusammenhang mit den folgenden Figuren 2 und 3 näher beschrieben.

Die Figuren 2 und 3 zeigen einen jeweils endseitigen Bereich eines Faserverbundkörpers 1, der ein Lasteinleitungselement 15 aufweist, wobei der Faserverbundkörper 1 bereits von den Kernkörpern 24, 25 und 26 entformt wurde. Oberhalb der Axialrichtung 10 ist ein Halbschnitt des Faserverbundkörpers 1 gezeigt und unterhalb der Axialrichtung 10 ist der Faserverbundkörper 1 nicht geschnitten von der Außenseite gezeigt. Dabei ist der Schichtaufbau lediglich in der Kontur angedeutet, sodass die Außenseite der Lasteinleitungselemente 15 dargestellt ist. Im Folgenden wird zunächst der Schichtaufbau des Faserverbundkörpers beschrieben, der in beiden Ausführungsbeispielen in den Figuren 1 und 2 gleich ist.

Auf der Innenseite des Faserverbundkörpers 1 befindet sich eine Beschichtung 12, die die Innenwand 21 des Faserverbundkörpers 1 bildet, und endseitig in Axialrichtung 10 schließt der Faserverbundkörper 1 mit einem Lasteinleitungselement 15 ab, das sich an die Innenwand 21, gebildet durch die Beschichtung 12, in axialer Richtung anschließt.

Die Beschichtung 12 besteht aus einem Epoxidharz, und auf die Beschichtung 12 ist eine Vliesschicht 13 aufgebracht. Die Vliesschicht 13 kann trocken auf die Beschichtung 12 aufgebracht werden, und das die Beschichtung 12 bildende Epoxidharz kann angetrocknet, insbesondere angeliert sein und teilweise in die Vliesschicht einnässen. Dadurch kann die Vliesschicht 13 leicht angetränkt werden, sodass sich diese mit Epoxidharz verbindet. Die Vliesschicht 13 kann gebildet sein aus einem Glasfaservlies, das auf besonders vorteilhafte Weise die Beschichtung 12 stabilisiert.

Auf die Außenseite der Vliesschicht 13 folgen mehrere Schichten aus einem Fasermaterial, die aufeinander abgelegt sind. Zunächst ist auf die Vliesschicht 13 eine erste Faserschicht 14 aufgebracht, die nur bis zur vorderen, angrenzenden Seite des Lasteinleitungselementes 15 vorgesehen ist. Auf die erste Faserschicht 14 folgt eine zweite Faserschicht 16, die sich sowohl über die freie Länge des Faserverbundkörpers 1 als auch über das Lasteinleitungselement 15 hinweg erstreckt. Die zweite Schicht 16 kann dabei Kräfte übertragen zwischen dem Lasteinleitungselemente 15 und dem Schichtaufbau.

Auf die zweite Faserschicht 16 ist eine dritte Faserschicht 17 im Bereich des Lasteinleitungselementes 15 aufgebracht und die dritte Faserschicht 17 stabilisiert dabei die zweite Faserschicht 16. Auf die dritte Faserschicht 17 im Bereich des Lasteinleitungselementes 15 und auf die zweite Faserschicht 16 ist eine vierte Faserschicht 18 aufgebracht, die sich ebenfalls wieder über die freie Rohrlänge des Faserverbundkörpers 1 und über das Lasteinleitungselement 15 erstreckt. Die vierte Faserschicht 18 dient dabei ebenso wie die zweite Faserschicht 16 zur Übertragung von Kräften. Schließlich folgt auf die vierte Faserschicht 18 noch eine im Bereich des Lasteinleitungselements 15 aufgebrachte fünfte Faserschicht 19.

Auf der Innenseite weist das Lasteinleitungselement 15 ein Innengewinde 31 auf, über das das Lasteinleitungselement 15, wie in Figur 1 gezeigt, mit dem Verschlusselement 30 verbunden werden kann. Wird der Faserverbundkörper 1 im späteren Einsatz als Dämpferrohr eines Schwingungsdämpfers eingesetzt, können über das Innengewinde 31 Abschlusskörper des Dämpferrohres mit dem Lasteinleitungselement 15 und folglich mit dem Faserverbundkörper 1 verbunden werden.

Figur 2 zeigt ein Ausführungsbeispiel eines Lasteinleitungselementes 15 mit einem umlaufenden Kragen 22 auf der Außenseite des Lasteinleitungselements 15, wobei der umlaufende Kragen 22 an einer gezeigten Stelle eine Aussparung 23 aufweist, wobei die Aussparung 23 auch mehrfach vorhanden sein kann.

Auf der Außenseite des Lasteinleitungselements 15 sind beispielhaft mehrere Fasern A ausschnittsweise angedeutet, die mit ihrem Verlauf einen Winkel von 80° zur Axialrichtung 10 einschließen. Diese Fasern A können beispielsweise gebildet sein durch die erste Faserschicht 14, durch die dritte Faserschicht 17 oder durch die fünfte Faserschicht 19. Weiterhin gezeigt sind Fasern B mit einem Verlauf, der einen Winkel zur Axialrichtung 10 von nur 15° einschließt, und beispielhaft verlaufen die Fasern B durch die Aussparung 23 und können so einen Formschluss bilden mit dem Lasteinleitungselement 15. Beispielsweise können die Fasern B gebildet sein durch die zweite Faserschicht 16, die sich sowohl über das Lasteinleitungselement 15, als auch über die freie Länge des Faserverbundkörpers 1 hinweg erstreckt. Durch den Verlauf der Fasern B mit einem geringen Winkel zur Axialrichtung 10 können diese besonders vorteilhaft zur Aufnahme von Längskräften dienen, wobei Fasern, beispielsweise der vierten Faserschicht 18, die einen Verlauf mit einem Winkel von etwa 50° zur Axialrichtung 10 aufweisen, zur Aufnahme von Torsionsmomenten besonders gut geeignet sind. Fasern mit einem Verlauf, die einen Winkel zur Axialrichtung 10 von 80° einschließen, und somit fast in Umfangsrichtung verlaufen, dienen besonders gut zur Stabilisierung benachbarter Faserschichten, wie beispielsweise vorgesehen mit der ersten Faserschicht 14, der dritten Faserschicht 17 und/oder mit der fünften Faserschicht 19.

Figur 3 zeigt ein weiteres Ausführungsbeispiel eines Lasteinleitungselements 15 mit einer Anzahl von Vorsprüngen 20, die inselartig verteilt auf der Außenfläche des Lasteinleitungselements 15 aufgebracht sind. Dabei kann beim Ablegen des Fasermaterials darauf geachtet werden, das Fasermaterial vorzugsweise in den Zwischenbereichen zwischen den Vorsprüngen 20 auf die Außenfläche des Lasteinleitungselements 15 abzulegen, wie mit den Fasern B mit einem Winkel von 15° zur Axialrichtung 10 gezeigt. Diese Fasern verlaufen in den Zwischenräumen zwischen den Vorsprüngen 20, was insbesondere durch die inneren Faserschichten, beispielsweise die zweite Faserschicht 16 und/oder die dritte Faserschicht 17, berücksichtigt werden kann. Weiterhin sind Fasern A mit einem Winkel von 80° zur Axialrichtung 10 gezeigt, die ebenfalls zwischen den Vorsprüngen 20 verlaufen können.

Die Vorsprünge 20 sind als pyramidenstumpfartige Vorsprünge 20 gezeigt, diese können auf gleiche Weise beispielsweise auch zylinderförmig, vorzugsweise kegelstumpfförmig ausgebildet sein.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung, auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste

- 1: Faserverbundkörper
- 10: Axialrichtung
- 11: zylinderförmiger Kernkörper
- 12: Beschichtung
- 13: Vliesschicht
- 14: erste Faserschicht
- 15: Lasteinleitungselement
- 16: zweite Faserschicht
- 17: dritte Faserschicht
- 18: vierte Faserschicht
- 19: fünfte Faserschicht
- 20: Vorsprung
- 21: Innenwand
- 22: Kragen
- 23: Aussparung
- 24: Kernkörperelement, Spanndorn
- 25: Kernkörperelement
- 26: Kernkörperelement
- 27: Wickelmaschine
- 28: Kupplungselement
- 29: Zugelement
- 30: Verschlusselement
- 31: Innengewinde
- A: Fasern mit einem Winkel von 80°
- B: Fasern mit einem Winkel von 15°

## Patentansprüche

1. Verfahren zur Herstellung rohrförmiger Faserverbundkörper (1) mittels einem sich in einer Axialrichtung (10) erstreckenden zylinderförmigen Kernkörper (11), auf dem Fasermaterial in einem kontinuierlichen Ablageverfahren abgelegt wird, wobei das Verfahren wenigstens die folgenden Schritte umfasst:
- Aufbringen einer Beschichtung (12) auf den Kernkörper (11),
- Aufbringen einer Vliesschicht (13) auf die Beschichtung (12),
- Ablegen des Fasermaterials auf die Vliesschicht (13) zur Bildung wenigstens einer ersten Faserschicht (14).

2. Verfahren nach Anspruch 1, **dadurch gekennzeichnet, dass** auf den Kernkörper (11) Lasteinleitungselemente (15) angeordnet werden, auf die die wenigstens eine Faserschicht (14) zumindest teilweise abgelegt wird und die einen Bestandteil des hergestellten Faserverbundkörpers (1) bilden.

3. Verfahren nach Anspruch 1 oder 2, **dadurch gekennzeichnet, dass** die erste Faserschicht (14) im Wickelverfahren auf die Vliesschicht (13) und wenigstens teilweise auf die Lasteinleitungselemente (15) abgelegt wird, insbesondere derart, dass der Faserverlauf der Faserschicht (14) mit der Axialrichtung (10) einen Winkel von 75° bis 85° und bevorzugt von 80° einschließt.

4. Verfahren nach einem der Ansprüche 1 bis 3, **dadurch gekennzeichnet, dass** auf die erste Faserschicht (14) und vorzugsweise auch auf die Lasteinleitungselemente (15) eine zweite Faserschicht (16) abgelegt wird, insbesondere derart, dass der Faserverlauf der Faserschicht (16) mit der Axialrichtung (10) einen Winkel von 10° bis 20° und bevorzugt von 15° einschließt.

5. Verfahren nach Anspruch 4, **dadurch gekennzeichnet, dass** auf die zweite Faserschicht (16) wenigstens im Bereich der Lasteinleitungselemente (15) eine dritte Faserschicht (17) abgelegt wird, insbesondere derart, dass der Faserverlauf der Faserschicht (17) mit der Axialrichtung (10) einen Winkel von 75° bis 85° und bevorzugt von 80° einschließt.

6. Verfahren nach Anspruch 5, **dadurch gekennzeichnet, dass** auf die zweite Faserschicht (16) und auf die dritte Faserschicht (17) eine vierte Faserschicht (18) abgelegt wird, insbesondere derart, dass der Faserverlauf der Faserschicht (18) mit der Axialrichtung (10) einen Winkel von 45° bis 55° und bevorzugt von 50° einschließt.

7. Verfahren nach Anspruch 6, **dadurch gekennzeichnet, dass** auf die vierte Faserschicht (18) wenigstens im Bereich der Lasteinleitungselemente (15) eine fünfte Faserschicht (19) abgelegt wird, insbesondere derart, dass der Faserverlauf der Faserschicht (19) mit der Axialrichtung (10) einen Winkel von 75° bis 85° und bevorzugt von 80° einschließt.

8. Faserverbundkörper (1), insbesondere zur Bildung eines Dämpferrohres eines Schwingungsdämpfers, der sich rohrförmig in einer Axialrichtung (10) erstreckt, mit einem Schichtaufbau aus Faserverbundwerkstoff,
**dadurch gekennzeichnet, dass** der Schichtaufbau zur Bildung einer Schichtfolge von innen nach außen aufweist:
- eine Beschichtung (12) zur Bildung einer Innenwand (21),
- eine Vliesschicht (13) zur Bildung einer Kopplungsschicht und
- wenigstens eine erste Faserschicht (14) zur Aufnahme von Kräften.

9. Faserverbundkörper (1) nach Anspruch 8, **dadurch gekennzeichnet, dass** die Beschichtung ein Harz, insbesondere ein Epoxidharz umfasst.

10. Faserverbundkörper (1) nach Anspruch 8 oder 9, **dadurch gekennzeichnet, dass** die Vliesschicht (13) ein Glasfaservlies oder ein Kohlefaservlies umfasst.

11. Faserverbundkörper (1) nach einem der Ansprüche 8 bis 10, **dadurch gekennzeichnet, dass** Lasteinleitungselemente (15) vorgesehen sind, die sich in Axialrichtung (10) endseitig an den Bereich der Beschichtung (12) anschließen und auf die die wenigstens eine Faserschicht (14) zumindest teilweise abgelegt ist, insbesondere die einen Faserverlauf aufweist, der mit der Axialrichtung (10) einen Winkel von 75° bis 85° und bevorzugt von 80° einschließt.

12. Faserverbundkörper (1) nach einem der Ansprüche 8 bis 11, **dadurch gekennzeichnet, dass** auf die erste Faserschicht (14) und vorzugsweise auch auf die Lasteinleitungselemente (15) eine zweite Faserschicht (16) abgelegt ist, insbesondere die einen Faserverlauf aufweist, der mit der Axialrichtung (10) einen Winkel von 10° bis 20° und bevorzugt von 15° einschließt.

13. Faserverbundkörper (1) nach Anspruch 12, **dadurch gekennzeichnet, dass** auf die zweite Faserschicht (16) wenigstens im Bereich der Lasteinleitungselemente (15) eine dritte Faserschicht (17) abgelegt ist, insbesondere die einen Faserverlauf aufweist, der mit der Axialrichtung (10) einen Winkel von 75° bis 85° und bevorzugt von 80° einschließt.

14. Faserverbundkörper (1) nach Anspruch 13, **dadurch gekennzeichnet, dass** auf die zweite Faserschicht (16) und auf die dritte Faserschicht (17) eine vierte Faserschicht (18) abgelegt ist, insbesondere die einen Faserverlauf aufweist, der mit der Axialrichtung (10) einen Winkel von 45° bis 55° und bevorzugt von 50° einschließt.

15. Faserverbundkörper (1) nach Anspruch 14, **dadurch gekennzeichnet, dass** auf die vierte Faserschicht (18) wenigstens im Bereich der Lasteinleitungselemente (15) eine fünfte Faserschicht (19) abgelegt ist, insbesondere die einen Faserverlauf aufweist, der mit der Axialrichtung (10) einen Winkel von 75° bis 85° und bevorzugt von 80° einschließt.

16. Faserverbundkörper (1) nach einem der Ansprüche 8 bis 15, **dadurch gekennzeichnet, dass** die Lasteinleitungselemente (15) auf der Außenfläche Vorsprünge (20) aufweisen, wobei die wenigstens eine Faserschicht (16, 17, 18, 19) formschließend in den Zwischenräumen zwischen den Vorsprüngen (20) abgelegt ist.

17. Faserverbundkörper (1) nach einem der Ansprüche 11 bis 16, **dadurch gekennzeichnet, dass** die Vorsprünge (20) auf der Außenfläche der Lasteinleitungselemente (15) verteilt etwa inselförmig angeordnet sind und insbesondere eine solche Anordnung zueinander aufweisen, dass Fasern der wenigstens einen Faserschicht (14, 16, 17, 18, 19) mit ihrem Faserverfauf in den Zwischenräumen richtungsunverändert zwischen den Vorsprüngen (20) verlaufen.

18. Faserverbundkörper (1) nach einem der Ansprüche 11 bis 16, **dadurch gekennzeichnet, dass** die Lasteinleitungselemente (15) im Wesentlichen als Rotationskörper ausgebildet sind und wobei die Vorsprünge (20) durch einen umlaufenden Kragen (22) mit über dem Umfang verteilt vorgesehenen Aussparungen (23) im Verlauf des Kragens (22) ausgebildet sind.

## Claims

1. Method for producing tubular fibre-composite bodies (1) by means of a cylindrical core body (11) which extends in an axial direction (10) and on which a fibrous material is deposited by a continuous depositing method, wherein the method comprises at least the following steps:
- applying a coating (12) to the core body (11);
- applying a non-woven layer (13) to the coating (12);
- depositing the fibrous material on the non-woven layer (13) so as to form at least one first fibrous layer (14).

2. Method according to Claim 1, **characterized in that** load-introduction elements (15) are disposed on the core body (11), at least one fibrous layer (14) being deposited at least partially on said load-introduction elements (15) and said load-introduction elements (15) forming a component part of the fibre-composite body (1) produced.

3. Method according to either of Claims 1 and 2, **characterized in that** the first fibrous layer (14) is deposited by a winding method on the non-woven layer (13) and at least partially on the load-introduction elements (15), in particular in such a manner that the fibre orientation of the fibrous layer (14) in relation to the axial direction (10) encloses an angle of 75° to 85°, and preferably of 80°.

4. Method according to one of Claims 1 to 3, **characterized in that** a second fibrous layer (16) is deposited on the first fibrous layer (14) and preferably also on the load-introduction elements (15), in particular in such a manner that the fibre orientation of the fibrous layer (16) in relation to the axial direction (10) encloses an angle of 10° to 20°, and preferably of 15°.

5. Method according to Claim 4, **characterized in that** at least in the region of the load-introduction elements (15) a third fibrous layer (17) is deposited on the second fibrous layer (16), in particular in such a manner that the fibre orientation of the fibrous layer (17) in relation to the axial direction (10) encloses an angle of 75° to 85°, and preferably of 80°.

6. Method according to Claim 5, **characterized in that** a fourth fibrous layer (18) is deposited on the second fibrous layer (16) and on the third fibrous layer (17), in particular in such a manner that the fibre orientation of the fibrous layer (18) in relation to the axial direction (10) encloses an angle of 45° to 55°, and preferably of 50°.

7. Method according to Claim 6, **characterized in that** at least in the region of the load-introduction elements (15) a fifth fibrous layer (19) is deposited on the fourth fibrous layer (18), in particular in such a manner that the fibre orientation of the fibrous layer (19) in relation to the axial direction (10) encloses an angle of 75° to 85°, and preferably of 80°.

8. Fibre-composite body (1), in particular for forming a damper tube of a vibration damper, which in a tubular manner extends in an axial direction (10), having a layered construction from a fibre-composite material, **characterized in that** the layered construction so as to form a layer sequence from the inside to the outside has:
- a coating (12) for forming an internal wall (21) ;
- a non-woven layer (13) for forming a coupling layer; and
- at least one first fibrous layer (14) for absorbing forces.

9. Fibre-composite body (1) according to Claim 8, **characterized in that** the coating comprises a resin, in particular an epoxy resin.

10. Fibre-composite body (1) according to either of Claims 8 and 9, **characterized in that** the non-woven layer (13) comprises a non-woven glass fibre fabric or a non-woven carbon fibre fabric.

11. Fibre-composite body (1) according to one of Claims 8 to 10, **characterized in that** load-introduction elements (15) which in the axial direction (10) adjoin the region of the coating (12) at the end sides and on which the at least one fibrous layer (14) is at least partially deposited are provided, said fibrous layer (14) having in particular a fibre orientation which in relation to the axial direction (10) encloses an angle of 75° to 85°, and preferably of 80°.

12. Fibre-composite body (1) according to one of Claims 8 to 11, **characterized in that** a second fibrous layer (16) is deposited on the first fibrous layer (14) and preferably also on the load-introduction elements (15), said second fibrous layer (16) having in particular a fibre orientation which in relation to the axial direction (10) encloses an angle of 10° to 20°, and preferably of 15°.

13. Fibre-composite body (1) according to Claim 12, **characterized in that** a third fibrous layer (17) at least in the region of the load-introduction elements (15) is deposited on the second fibrous layer (16), said third fibrous layer (17) having in particular a fibre orientation which in relation to the axial direction (10) encloses an angle of 75° to 85°, and preferably of 80°.

14. Fibre-composite body (1) according to Claim 13, **characterized in that** a fourth fibrous layer (18) is deposited on the second fibrous layer (16) and on the third fibrous layer (17), said fourth fibrous layer (18) having in particular a fibre orientation which in relation to the axial direction (10) encloses an angle of 45° to 55°, and preferably of 50°.

15. Fibre-composite body (1) according to Claim 14, **characterized in that** a fifth fibrous layer (19) at least in the region of the load-introduction elements (15) is deposited on the fourth fibrous layer (18), said fifth fibrous layer (19) having in particular a fibre orientation which in relation to the axial direction (10) encloses an angle of 75° to 85°, and preferably of 80°.

16. Fibre-composite body (1) according to one of Claims 8 to 15, **characterized in that** the load-introduction elements (15) on the outer face have projections (20), wherein the at least one fibrous layer (16, 17, 18, 19) is deposited in a form-fitting manner in the intermediate spaces between the projections (20).

17. Fibre-composite body (1) according to one of Claims 11 to 16, **characterized in that** the projections (20) on the outer face of the load-introduction elements (15) are disposed so as to be distributed in an approximately insular manner and in particular have such a mutual arrangement that fibres of the at least one fibrous layer (14, 16, 17, 18, 19) by way of the fibre orientation thereof in the intermediate spaces between the projections (20) run without a change in terms of direction.

18. Fibre-composite body (1) according to one of Claims 11 to 16, **characterized in that** the load-introduction elements (15) are configured substantially as rotational bodies and wherein the projections (20) are configured by way of an encircling collar (22) having recesses (23) that are provided so as to be distributed across the circumference in the orientation of the collar (22).

## Revendications

1. Procédé de fabrication de corps composites fibreux de forme tubulaire (1) au moyen d'un corps noyau (11) de forme cylindrique s'étendant dans une direction axiale (10) sur lequel est déposé le matériau fibreux suivant un procédé de pose continue, le procédé comprenant au moins les étapes suivantes :
- application d'un revêtement (12) sur le corps noyau (11),
- application d'une couche de non-tissé (13) sur le revêtement (12),
- dépose du matériau fibreux sur la couche de non-tissé (13) pour former au moins une première couche fibreuse (14).

2. Procédé selon la revendication 1, **caractérisé en ce que** des éléments d'introduction de charge (15) sont disposés sur le corps noyau (11), sur lesquels au moins une couche fibreuse (14) est déposée au moins en partie et qui forment un constituant du corps composite fibreux fabriqué (1).

3. Procédé selon la revendication 1 ou 2, **caractérisé en ce que** la première couche fibreuse (14) est déposée dans un procédé d'enroulement sur la couche de non-tissé (13) et au moins en partie sur les éléments d'introduction de charge (15), en particulier de telle sorte que l'orientation des fibres de la couche fibreuse (14) forme avec la direction axiale (10) un angle de 75° à 85° et de préférence de 80°.

4. Procédé selon l'une quelconque des revendications 1 à 3, **caractérisé en ce que** sur la première couche fibreuse (14) et de préférence également sur les éléments d'introduction de charge (15) est déposée une deuxième couche fibreuse (16), en particulier de telle sorte que l'orientation des fibres de la couche fibreuse (16) forme avec la direction axiale (10) un angle de 10° à 20° et de préférence de 15°.

5. Procédé selon la revendication 4, **caractérisé en ce que** sur la deuxième couche fibreuse (16) est déposée au moins dans la région des éléments d'introduction de charge (15) une troisième couche fibreuse (17) notamment de telle sorte que l'orientation des fibres de la couche fibreuse (17) forme avec la direction axiale (10) un angle de 75° à 85° et de préférence de 80°.

6. Procédé selon la revendication 5, **caractérisé en ce que** sur la deuxième couche fibreuse (16) et sur la troisième couche fibreuse (17) est déposée une quatrième couche fibreuse (18), en particulier de telle sorte que l'orientation des fibres de la couche fibreuse (18) avec la direction axiale (10) forme un angle de 45° à 55° et de préférence de 50°.

7. Procédé selon la revendication 6, **caractérisé en ce que** sur la quatrième couche fibreuse (18) est déposé au moins dans la région des éléments d'introduction de charge (15) une cinquième couche fibreuse (19), en particulier de telle sorte que l'orientation des fibres de la couche fibreuse (19) forme avec la direction axiale (10) un angle de 75° à 85° et de préférence de 80°.

8. Corps composite fibreux (1), en particulier pour la formation d'un tube amortisseur d'un amortisseur d'oscillations, qui s'étend sous forme tubulaire dans une direction axiale (10), avec une structure en couches constituée d'un matériau composite fibreux,
**caractérisé en ce que** la structure en couches présente, pour la formation d'une succession de couches depuis l'intérieur vers l'extérieur :
- un revêtement (12) pour former une paroi intérieure (21),
- une couche de non-tissé (13) pour la formation d'une couche d'accouplement et
- au moins une première couche fibreuse (14) pour recevoir des forces.

9. Corps composite fibreux (1) selon la revendication 8, **caractérisé en ce que** le revêtement comprend une résine, en particulier une résine époxy.

10. Corps composite fibreux (1) selon la revendication 8 ou 9, **caractérisé en ce que** la couche de non-tissé (13) comprend un non-tissé en fibres de verre ou un non-tissé en fibres de carbone.

11. Corps composite fibreux (1) selon l'une quelconque des revendications 8 à 10, **caractérisé en ce que** des éléments d'introduction de charge (15) sont prévus, lesquels se raccordent dans la direction axiale (10) du côté de l'extrémité à la région du revêtement (12) et sur lesquels est au moins en partie déposée l'au moins une couche de fibres (14), en particulier qui présente une orientation des fibres qui forme avec la direction axiale (10) un angle de 75° à 85° et de préférence de 80°.

12. Corps composite fibreux (1) selon l'une quelconque des revendications 8 à 11, **caractérisé en ce que** sur la première couche fibreuse (14) et de préférence également sur les éléments d'introduction de charge (15) est déposée une deuxième couche de fibres (16), en particulier qui présente une orientation des fibres qui forme avec la direction axiale (10) un angle de 10° à 20° et de préférence de 15°.

13. Corps composite fibreux (1) selon la revendication 12, **caractérisé en ce que** sur la deuxième couche fibreuse (16) est déposée au moins dans la région des éléments d'introduction de charge (15) une troisième couche fibreuse (17), en particulier qui présente une orientation des fibres qui forme avec la direction axiale (10) un angle de 75° à 85° et de préférence de 80°.

14. Corps composite fibreux (1) selon la revendication 13, **caractérisé en ce que** sur la deuxième couche fibreuse (16) et sur la troisième couche fibreuse (17) est déposée une quatrième couche fibreuse (18), en particulier qui présente une orientation des fibres qui forme avec la direction axiale (10) un angle de 45° à 55° et de préférence de 50°.

15. Corps composite fibreux (1) selon la revendication 14, **caractérisé en ce que** sur la quatrième couche fibreuse (18) est déposée au moins dans la région des éléments d'introduction de charge (15) une cinquième couche fibreuse (19), en particulier qui présente une orientation des fibres qui forme avec la direction axiale (10) un angle de 75° à 85° et de préférence de 80°.

16. Corps composite fibreux (1) selon l'une quelconque des revendications 8 à 15, **caractérisé en ce que** les éléments d'introduction de charge (15) présentent sur la surface extérieure, des saillies (20), l'au moins une couche fibreuse (16, 17, 18, 19) étant déposée dans l'espace intermédiaire entre les saillies (20) en fermant la forme.

17. Corps composite fibreux (1) selon l'une quelconque des revendications 11 à 16, **caractérisé en ce que** les saillies (20) sont disposées sur la surface extérieure des éléments d'introduction de charge (15) de manière répartie approximativement en forme d'îlots et en particulier présentent un agencement les unes par rapport aux autres de telle sorte que des fibres de l'au moins une couche fibreuse (14, 16, 17, 18, 19) s'étendent avec leur orientation de fibres entre les saillies (20) dans les espaces intermédiaires sans modifier leur direction.

18. Corps composite fibreux (1) selon l'une quelconque des revendications 11 à 16, **caractérisé en ce que** les éléments d'introduction de charge (15) sont réalisés essentiellement sous forme de corps de révolution et dans lequel les saillies (20) sont réalisées par un collet périphérique (22) avec des évidements (23) prévus de manière répartie sur la périphérie dans l'étendue du collet (22).
